# EUROPEAN PATENT SPECIFICATION

(11) **EP 3 585 750 B1**
(45) Date of publication and mention of the grant of the patent: **13.01.2021**
(21) Application number: 18705674.2
(22) Date of filing: 23.02.2018
(51) Int. Cl.: C04B 20/12, C04B 26/26

(54) **A COATED GRANULE, AND A BITUMINOUS ROOFING MEMBRANE COMPRISING A PLURALITY OF THE COATED GRANULES**
BESCHICHTETES GRANULAT UND BITUMINÖSE DACHBAHN MIT EINER VIELZAHL BESCHICHTETER GRANULATE
GRANULE ENROBÉE ET MEMBRANE DE TOITURE BITUMINEUSE COMPRENANT UNE PLURALITÉ DE GRANULES ENROBÉES

(30) Priority: 27.02.2017 EP 17158120
(43) Date of publication of application: 01.01.2020
(73) Proprietor: ICOPAL ApS, 2730 Herlev (DK)
(72) Inventor: MADEC, Yves, 41100 Vendôme (FR); HAUDEBERT, Dominique, 41160 La Ville-aux-Clercs (FR)
(74) Representative: Stoffregen, Hans-Herbert
(86) International application number: PCT/EP2018/054565
(87) International publication number: WO 2018/154070

(56) References cited:
- WO-A1-2013/192336
- GB-A- 1 234 071
- US-A1- 2011 086 201

## Description

The present invention relates to a coated granule suitable for defining the upper surface of a bituminous roofing membrane, in particular for making a cool roof designed to reflect more sunlight and absorb less heat than a standard roof while at the same time having depolluting properties.

### Background of the invention

A cool roof can benefit a building and its occupants by:
- reducing energy bills by decreasing air conditioning needs,
- improving indoor comfort for spaces that are not air conditioned, such as garages or covered patios, and
- decreasing roof temperature, which may extend roof service life.

Beyond the building itself, cool roofs can also benefit the environment, especially when many buildings in a community have them. Cool roofs can:
- reduce local air temperatures (sometimes referred to as the urban heat island effect),
- lower peak electricity demand, which can help prevent power outages, and
- reduce power plant emissions, including carbon dioxide, sulfur dioxide, nitrous oxides, and mercury, by reducing cooling energy use in buildings.

It is well known to suggest bituminous roofing membranes in the form of a bituminous web having a protective layer of mineral granules, such as coarse sand, covering the upper surface of the bituminous web; the granules may sometimes be coated in which case the coating may have such a color that the roofing membrane presents itself with a desired colored appearance.

Typically the coated granules are formed by applying in a mixer the coating onto each granule. The individual granules may, by way of example, be formed by the sintering of a ceramic mixture, see WO2013/192,336, and WO2016/001,303, the latter suggesting mixtures comprising up to 32% by weight of cristobalite.

Alternatively, coatings may be applied on the bitumen membrane, see WO 2004/070,107 where the coating comprises TiO₂ as a whitener and selected in amounts that give the roofing membrane high reflective properties.

WO 2013/192336 describes the reduction of solar transmittance using coated cristobalite comprising granules with oil or polysiloxane.

Manufacturing membranes using the aforementioned granules allows a controlling of the reflectance TSR (Total Solar Reflectance) of incident light but involves relatively high costs.

In addition, a high TSR (Total Solar Reflectance) can only be maintained for a relatively short period of time since pollution will typically reduce the reflective properties over time through the formation of dark spots on the roofing membrane. Hence, additional measures are required to maintain the high TSR.

Depolluting roofing membranes are known from i.a. WO 2009/056,492. A soot resistant roofing membrane is disclosed in GB 1,234,071, wherein a hydrophobic surface coating degrades to become a hydrophilic surface coating. As may be understood it is known that the provision of a top layer on a bitumen membrane of a composition comprising i.a. i) TiO₂ in its anatase form and ii) a binder, will give a depolluting effect through the conversion - by the TiO₂ in its anatase form - of polluting NOₓ agents settled on the roofing membrane into substances that are easily flushed off during rainfalls, thereby keeping the roofing membrane essentially free from dark stains/spots.

### Summary of the invention

in the following text individual granules of the roofing membrane will interchangeably also be referred to by the term "core" it being understood that the individual granule/core is coated to form a coated granule.

Particles of TiO₂ in its anatase form for use in depolluting roofing membranes has a blueish color darker than particles of TiO₂ in its rutile form. For this reason the use of particles of TiO₂ in its rutile form can be preferred as a component in white coating compositions for the whitening of granules. When using TiO₂ in its anatase form in coating compositions the further addition of pigments to the coating composition is required to obtain high TSR-values of the roofing membrane, with ensuing costs.

The present inventors have found that by selecting as the core that is coated a granule with a relatively high cristobalite content, preferably comprising only cristobalite and little impurities, a high TSR (Total Solar Reflectance) and a high SRI (Solar Reflectance Index) of a roofing membrane with a multiplicity of such coated granules may be achieved. Thereby the overall ability of the membrane to reject solar heat is enhanced, the transmittance being low.

Thus, with the present invention high TSR-values of the roofing membrane above around 70% may still be achieved despite the use of a coating composition comprising TiO₂ in its anatase form.

More specifically, the present inventors propose herewith a coated granule suitable for use in a bituminous roofing membrane, the coated granule consisting of:
i) a granule having a solar transmittance of less than 3% for wavelengths less than 1400nm,
   - said granule comprising 20%-100% by weight of cristobalite,
ii) a first coating on the surface of the granule,
   - said coating comprising TiO₂ in anatase form and a binder,
      and
iii)
   a transparent or translucent oil barrier coating on said first coating,
   - said oil barrier coating being an organo-silicon compound which will form a bond with a bituminous material,
   - said oil barrier degrading upon exposure to the ultra violet radiation in sunlight and the action of rainwater to thereby expose said first coating.

It follows that the present invention also concerns a bituminous roofing membrane comprising a bituminous web having a first side, a plurality of the aforementioned coated granules being spread over said first side to define a surface of the membrane.

The oil barrier defined by the additional, second layer applied directly onto the first coating is preferably selected to be degradable upon exposure to UV-radiation after a few days or weeks, thereby exposing the first coating to the environment, allowing the anatase TiO₂ to act as a depollutant. In some cases this degradation of the coating defining the oil barrier is assisted by photocatalytic action of the anatase titanium dioxide TiO₂ of the first coating.

As the skilled person will understand, for each coated granule the thickness of the first coating may vary locally due to eg. the fact that the first coating is applied onto a surface which is not even. Preferably, the first coating covers at least 50%, preferably at least 70% of the surface of the granule on the aforementioned first side of the bituminous roofing membrane.

When applying the first coating, such as in a coating procedure using the aforementioned mixer, the applying may be adjusted such that the first coating on average covers at least at least 60% and at most 90% of the surface of the granules. The granules are then spread over the aforementioned side to make the bituminous roofing membrane.

Moreover, the first coating preferably has an average thickness in the range of 10µm to 20µm, preferably 5µm to 15µm, preferably with a maximum thickness at any place of 100 µm. Applicant presently prefers to use particles of anatase TiO₂ having a size in the order of 0.2µm-0.4µm, such as around 0.3µm.

The cristobalite raw material granule may be in a naturally occurring form, or may be manufactured on the basis of naturally occurring materials, with normal impurities.

The oil barrier prevents or restricts migration of oil components to the surface of the membrane from the bituminous web onto which a multiplicity of the granules have been applied. Such migration could lead to an undesired formation of spots/stains of migrated oil on the surface, as discussed generally in WO14015876, detrimental to the desired low transmittance and high reflectivity.

### Brief description of an embodiment of the invention

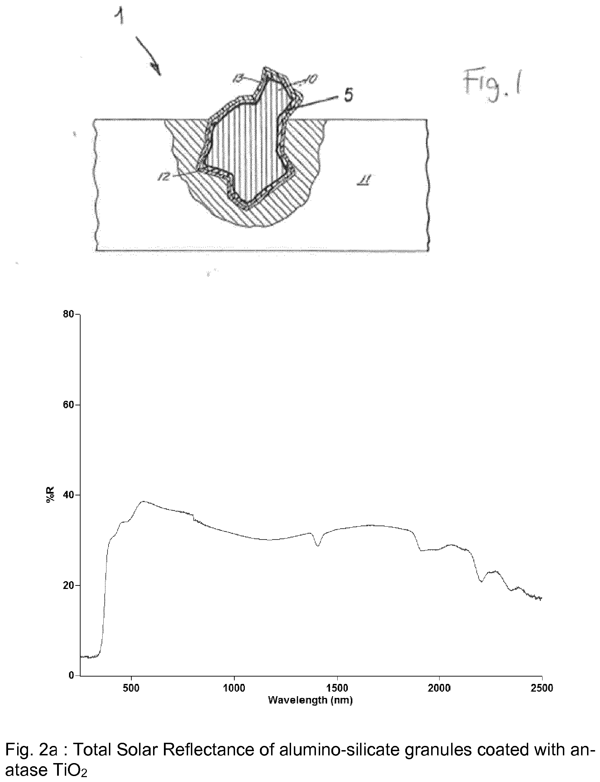

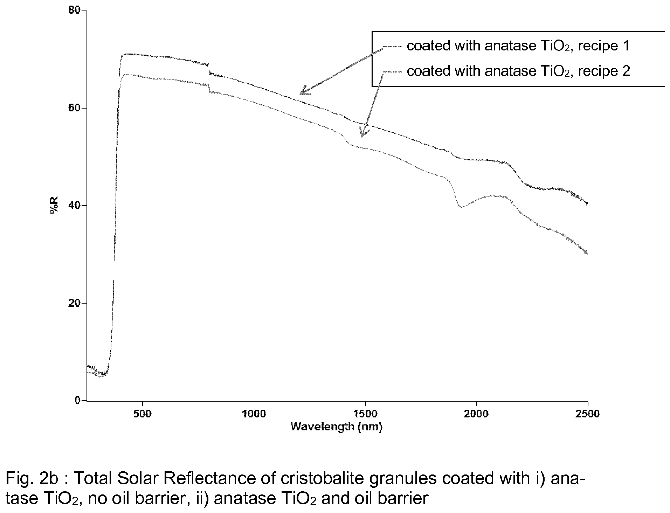

An embodiment of the invention will now be described in further details, with reference to figs. 1 and 2a and 2b.

Fig. 1 shows schematically in cross-section and enlarged a portion of a bituminous roofing membrane 1 comprising a bituminous web 11 having on a side thereof a coated granule 10 of the present invention. It will be understood that the shown granules 10 with coating are distributed evenly and densely on the bituminous web 11 to effectively define the visible appearance of the roofing membrane 1.

Each shown granule 10 is a cristobalite granule/core having a size in the order of 1mm and carrying directly thereon a first covering or coating layer 5 in the form of a composition comprising or consisting of i) TiO₂ in its anatase form and ii) a binder, such as a monoaluminiumphosphate binder. In this embodiment the thickness of this layer 5 is in the range of 10 to 20µm, with particles of anatase TiO₂ having a size in the order of 0.2µm- 0.4µm, such as around 0.3µm, so that the bituminous roofing membrane 1 provides a depolluting effect and at the same time highly desirable TSR and SRI values. Preferably, no granules of other type and no granules having any first coating layer 5 of other composition are distributed onto the bituminous web 11. Specifically, the first coating layer 5 may in one embodiment have the following composition:

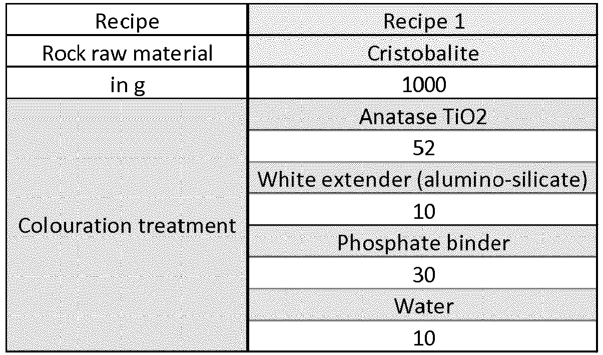

During manufacture of the coated granule 10 an additional second layer is applied directly onto the first coating layer 5 to form an oil barrier defining the outer surface of the coated granule 10. In the membrane 1 a portion 12 of this second layer will be in contact with the bituminous material of the web 11 by the coated granule 10 being partially embedded therein through a rolling procedure during the final steps of the manufacturing of the membrane 1. Another portion 13 of the second layer is exposed to the environment. The second layer forms a firm bond to the first layer 5 and to the bituminous material of the web 11 on the other hand. Specifically, the second layer forms an oil barrier coating, which may be transparent, preventing or restricting migration of oil components of the bituminous web towards the surface of the membrane 1. At the same time the aforementioned portion 13 of the oil barrier (defined by the second layer) is by selection of the compound for the oil barrier, degradable upon exposure to UV-radiation, such as typically after a few days or weeks after application of the membrane on a building roof/building surface, such as after 4 weeks, to thereby expose the first layer 5 and, hence, the titanium dioxide TiO₂ containing first layer to the environment, allowing the anatase TiO₂ to act as a depollutant. In some cases this degradation/exposing of the first layer 5 is assisted by photocatalytic action of the titanium dioxide TiO₂ of the first layer.

The compound defining the oil barrier may by way of example be an organo-silicon compound, such as polymethylhydrogensiloxane, which may be mixed with an acrylic resin. The acrylic resin has the further advantageous effect of binding any free dust particles to the surface of the granules with the oil barrier during the process of manufacturing the coated granules. Such free dust would be of disadvantage when the coated granules are applied to the bituminous web on manufacturing the roofing membrane in causing problems with the adhering of the coated granules to the bituminous web as well as causing possible respiratory health problems to workers making the roofing membrane ; an increased resistance against staining of the roofing membrane may also obtained by this binding, in the case of dust having bitumen oil absorption properties. Examples of useful acrylic resins are compounds having a glass transition temperature of the order of -20°C - 0°C, or chosen in the family of polyacrylate polymers, styrene-acrylic copolymers, or the like.

Fig. 2a shows a curve representing the reflectance as a function of solar spectrum wavelengths ranging from 200 to 2500nm, for a bituminous roofing membrane with alumino-silicate granules carrying an anatase TiO₂-containing coating.

Fig. 2b, on the other hand, shows two curves representing the solar reflectance for a bituminous roofing membrane of the present invention, with granules comprising more than 20% cristobalite and carrying the same coating applied to the granules subject to the analysis in fig. 2a, i) without any further oil barrier coating and ii) with an oil barrier coating for preventing migrating oil and having the following composition:

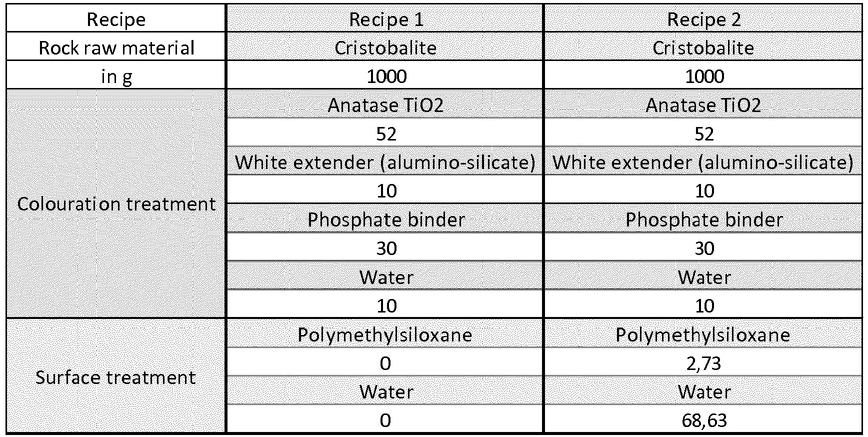

Using an oil barrier with an acrylic resin composition has no significant effect on the Total Solar Reflectance as depicted in fig. 2b ; where acrylic resin is used then for the example of recipe 2 the amount of polymethylsiloxane would be as above and water amounting to 65.72 and acrylic resin 2.91.

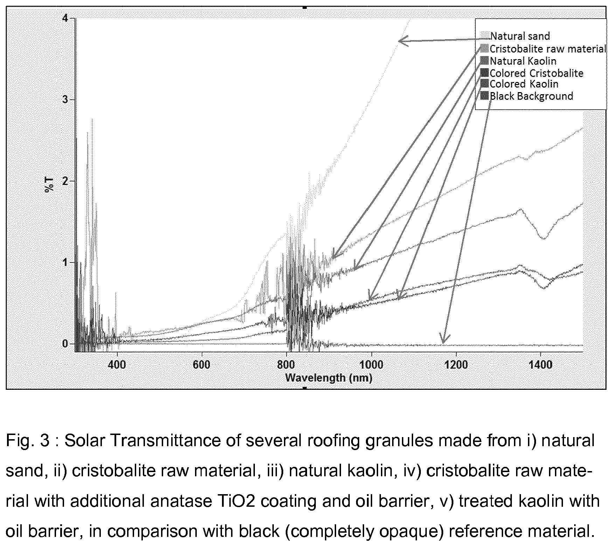

As can be seen from the figures, including the blueish TiO₂ in its anatase form in the coating composition defining the first coating layer 5 on granules 10 comprising a relatively high % by weight of cristobalite, allows for a high reflectance, i.e. higher values of the SRI, compared to fig. 2a, thereby effectively decreasing the temperature of a building onto which the membrane is applied. In this manner a long life bituminous roofing membrane resistant to migrating oil and having depolluting properties and a high SRI is obtained. Fig. 3 shows a curve representing the transmittance of several granulates as a function of solar spectrum wavelengths ranging from 200 to 1500nm. As can be seen, the transmittance of cristobalite raw material is lower than natural sand but higher than natural alumina-silicate such as kaolinite. This means that the cristobalite raw material granules are not fully opaque to solar wavelengths, therefore the total solar reflectance is reduced. The first coating comprising TiO₂ in anatase form (referred to in fig. 3 as "colored cristobalite") allows for a reduction of the transmittance to a lower level than the natural kaolinite granules and similar level as the treated kaolinite granules.

## Claims

1. A coated granule suitable for use in a bituminous roofing membrane (1), said coated granule comprising:
i) a granule (10) having a solar transmittance of less than 3% for wavelengths less than 1400nm,
- said granule (10) comprising 20%-100% by weight of cristobalite,
ii) a first coating (5) on the surface of the granule (10),
- said coating comprising TiO₂ in anatase form and a binder,
and
iii)
a transparent or translucent oil barrier coating on said first coating (5),
- said oil barrier coating being an organo-silicon compound which will form a bond with a bituminous material,
- said oil barrier degrading upon exposure to the ultra violet radiation in sunlight and the action of rainwater to thereby expose said first coating (5).

2. The coated granule of claim 1, said granule (10) comprising 50%-90% by weight of cristobalite, the balance preferably including another crystalline phase of silica.

3. The coated granule of according to any of the previous claims, the compound defining said oil barrier being polymethylhydrogensiloxane, which may be mixed with an acrylic resin.

4. The coated granule according to any of the previous claims, said binder being a silicate or phosphate binder.

5. The coated granule according to the previous claim, said binder comprising monoaluminiumphosphate.

6. The coated granule according to any of the previous claims, said granule (10) having a size in the range 0.325mm to 2.5mm.

7. The coated granule according to any of the previous claims, said first coating (5) covering at least 50%, preferably at least 70% of the surface of said granule (10).

8. The coated granule according to any of the previous claims, said first coating (5) covering at least 60% and at most 90% of the surface of said granule (10).

9. The coated granule according to any of the previous claims, said first coating (5) having an average thickness in the range of 10 µm to 20µm, preferably 5 to 15µm.

10. The coated granule according to any of the previous claims, said first coating (5) having a maximum thickness at any place of 100 µm.

11. The coated granule according to any of the previous claims, said first coating (5) comprising said anatase TiO₂ in the form of particles having a size in the order of 0.2µm-0.4µm.

12. A bituminous roofing membrane (1) comprising a bituminous web (11) having a first side, coated granules (10) according to any of the previous claims being spread over said first side to define a surface of said membrane (1).

## Patentansprüche

1. Ein beschichtetes Granulat, das zur Verwendung in einer bituminösen Dachmembran (1) geeignet ist, wobei das beschichtete Granulat umfasst:
i) ein Granulat (10) mit einer Sonnendurchlässigkeit von weniger als 3% für Wellenlängen von weniger als 1400 nm,
- wobei das Granulat (10) 20 bis 100 Gewichtsprozent Cristobalit enthält,
ii) eine erste Beschichtung (5) auf der Oberfläche des Granulats (10),
- wobei die Beschichtung TiO2 in Anatasform und ein Bindemittel enthält, und
iii) eine transparente oder durchscheinende Ölsperrbeschichtung auf der ersten Beschichtung (5),
- wobei die Ölsperrbeschichtung eine Organosiliziumverbindung ist, die eine Bindung mit einem bituminösen Material eingeht,
- die Ölsperre sich bei Einwirkung der ultravioletten Strahlung im Sonnenlicht und der Wirkung von Regenwasser abbaut, um dadurch die erste Beschichtung (5) freizulegen.

2. Das beschichtete Granulat nach Anspruch 1, wobei das Granulat (10) 50 bis 90 Gew.-% Cristobalit enthält und der Rest vorzugsweise eine weitere kristalline Phase aus Siliciumdioxid enthält.

3. Das beschichtete Granulat nach einem der vorstehenden Ansprüche, wobei die Verbindung, die die Ölsperre definiert, Polymethylhydrogensiloxan ist, das mit einem Acrylharz gemischt sein kann.

4. Das beschichtete Granulat nach einem der vorhergehenden Ansprüche, wobei das Bindemittel ein Silikat- oder Phosphatbindemittel ist.

5. Das beschichtete Granulat nach einem der vorhergehenden Ansprüche, wobei das Bindemittel Monoaluminiumphosphat enthält.

6. Das beschichtete Granulat nach einem der vorhergehenden Ansprüche, wobei das Granulat (10) eine Größe im Bereich von 0,325 mm bis 2,5 mm hat.

7. Das beschichtete Granulat nach einem der vorhergehenden Ansprüche, wobei die erste Beschichtung (5) mindestens 50%, vorzugsweise mindestens 70% der Oberfläche des Granulats (10) bedeckt.

8. Das beschichtete Granulat nach einem der vorhergehenden Ansprüche, wobei die erste Beschichtung (5) mindestens 60% und höchstens 90% der Oberfläche des Granulats (10) bedeckt.

9. Das beschichtete Granulat nach einem der vorhergehenden Ansprüche, wobei die erste Beschichtung (5) eine durchschnittliche Dicke im Bereich von 10 µm bis 20 µm, vorzugsweise 5 bis 15 µm, aufweist.

10. Das beschichtete Granulat nach einem der vorhergehenden Ansprüche, wobei die erste Beschichtung (5) an einer beliebigen Stelle eine maximale Dicke von 100 µm aufweist.

11. Das beschichtete Granulat nach einem der vorhergehenden Ansprüche, wobei die erste Beschichtung (5) das Anatas TiO2 in Form von Teilchen mit einer Größe in der Größenordnung von 0,2 µm bis 0,4 µm enthält.

12. Eine bituminöse Dachmembran (1), umfassend eine bituminöse Bahn (11) mit einer ersten Seite, wobei beschichtetes Granulat (10) nach irgendeinem der vorhergehenden Ansprüche über die erste Seite verteilt ist, um eine Oberfläche der Membran (1) zu definieren.

## Revendications

1. Granule enrobée appropriée pour une utilisation dans une membrane de toiture bitumineuse (1), ladite granule enrobée comprenant :
(i) une granule (10) ayant une transmittance solaire inférieure à 3 % pour des longueurs d'ondes inférieures à 1400 nm,
- ladite granule (10) comprenant de 20 % à 100 % en poids de cristobalite,
(ii) un premier enrobage (5) sur la surface de la granule (10),
- ledit enrobage comprenant du TiO₂ sous une forme anatase et un liant,
et
(iii) un enrobage barrière à l'huile transparent ou translucide sur ledit premier enrobage (5),
- ledit enrobage barrière à l'huile étant un composé organo-silicié qui formera une liaison avec un matériau bitumineux,
- ladite barrière à l'huile se dégradant lors d'une exposition au rayonnement ultraviolet à la lumière du soleil et suite à l'action de l'eau de pluie de façon à exposer ainsi ledit premier enrobage (5).

2. Granule enrobée selon la revendication 1, ladite granule (10) comprenant de 50 % à 90 % en poids de cristobalite, le reste comprenant de préférence une autre phase cristalline de silice.

3. Granule enrobée selon l'une quelconque des précédentes revendications, le composé définissant ladite barrière à l'huile étant du polyméthylhydrogénosiloxane, qui peut être mélangé à une résine acrylique.

4. Granule enrobée selon l'une quelconque des précédentes revendications, ledit liant étant un liant au silicate ou au phosphate.

5. Granule enrobée selon la précédente revendication, ledit liant comprenant du monophosphate d'aluminium.

6. Granule enrobée selon l'une quelconque des précédentes revendications, ladite granule (10) ayant une taille se situant dans la plage de 0,325 mm à 2,5 mm.

7. Granule enrobée selon l'une quelconque des précédentes revendications, ledit premier enrobage (5) recouvrant au moins 50 %, de préférence au moins 70 %, de la surface de ladite granule (10).

8. Granule enrobée selon l'une quelconque des précédentes revendications, ledit premier enrobage (5) recouvrant au moins 60 % et au plus 90 % de la surface de ladite granule (10).

9. Granule enrobée selon l'une quelconque des précédentes revendications, ledit premier enrobage (5) ayant une épaisseur moyenne se situant dans la plage de 10 µm à 20 µm, de préférence de 5 à 15 µm.

10. Granule enrobée selon l'une quelconque des précédentes revendications, ledit premier enrobage (5) ayant partout une épaisseur maximale de 100 µm.

11. Granule enrobée selon l'une quelconque des précédentes revendications, ledit premier enrobage (5) comprenant ledit TiO₂ anatase sous la forme de particules ayant une taille de l'ordre de 0,2 µm à 0,4 µm.

12. Membrane de toiture bitumineuse (1) comprenant une bande bitumineuse (11) ayant un premier côté, des granules enrobées (10) selon l'une quelconque des précédentes revendications étant répandues sur ledit premier côté de façon à définir une surface de ladite membrane (1).
